# FASCICULE DE BREVET EUROPEEN

(11) **EP 0 444 175 B1**
(45) Date de publication et mention de la délivrance du brevet: **05.06.1996**
(21) Numéro de dépôt: 90913704.4
(22) Date de dépôt: 12.09.1990
(51) Int. Cl.: G01D 5/14, G01B 7/02

(54) **DISPOSITIF DE MESURE DE DEPLACEMENT ET DE POSITION**
MESSVORRICHTUNG FÜR POSITION UND BEWEGUNG
DEVICE FOR THE MEASUREMENT OF MOVEMENT AND POSITION

(30) Priorité: 12.09.1989 FR 8911900
(43) Date de publication de la demande: 04.09.1991
(73) Titulaire: BAZENET, Pierre, 69160 Tassin (FR)
(72) Inventeur: BAZENET, Pierre, 69160 Tassin (FR)
(86) Numéro de dépôt international: FR9000649
(87) Numéro de publication internationale: WO9104459

(56) Documents cités:
- EP-A- 0 209 513
- WO-A-89/02570
- DE-A- 3 138 765
- US-A- 4 316 081
- US-A- 4 747 215

## Description

La présente invention se rapport à un dispositif de mesure de déplacement et de position de deux objets mobiles en translation l'un par rapport à l'autre.

Par la demande de brevet WO 89/02570, il est connu d'utiliser, pour la mesure de déplacement et de position sur des grandes longueurs, un dispositif comprenant une règle constituée par un ruban métallique flexible muni d'une rangée longitudinale d'ajours équidistants, et un détecteur explorant la graduation de ladite règle soit à l'aide de moyens opto-électriques, soit par voie magnétique (détecteur à effet de Hall, détecteur magnéto-résistif, détecteur inductif). Ce dispositif qui est d'un coût particulièrement faible, grâce à la nature simple de la règle, présente toutefois l'inconvénient, lorsque la détection s'effectue par voie opto-électrique, de ne pas pouvoir être utilisé dans des atmosphères susceptibles de donner lieu au dépôt de corps étrangers (poussières, copeaux, vapeurs, eau, huile, etc.) sur la règle ce qui peut fausser la mesure. De plus, que la détection s'effectue par voie opto-électrique ou magnétique, la présence des ajours dans la règle provoque une usure des éléments en contact avec cette dernière (détecteur, joints, etc.). Cela pose en particulier des problèmes de joints lorsque la règle est incorporée à un vérin pneumatique à bande, ce qui constitue une application particulièrement intéressante d'un tel dispositif de mesure de déplacement et de position à règle flexible.

On connaît par ailleurs des dispositifs de mesure de déplacement et de position utilisant comme règle un ruban souple dont la graduation est constituée par des repères magnétiques aimantés (dispositifs commercialisés sous la dénomination "DIGIRULER" par la société SONY MAGNESCALE INC. et sous la dénomination "MILLI JIKI SCALE" par la société SOKKI ELECTRONICS CORP.). Ces dispositifs utilisent des rubans en matériau élastomère auxquels sont inclus soit de la poudre de ferrite aimantée, soit de petits aimants permanents représentant les repères détectables de la graduation.

De tels rubans sont mal adaptés à des application industrielles car ils attirent les particules métalliques fréquentes au voisinage des machines, ce qui perturbe les moyens de détection.

Par ailleurs, l'élastomère dont est constitué le ruban présente une stabilité mécanique et une stabilité au vieillissement qui sont incompatibles avec les exigences de précision imposées.

De plus, en raison de leurs qualités mécaniques insuffisantes, ces rubans ne peuvent pas être tendus et ne peuvent pas être enroulés ou passer sur des poulies. Au contraire, il nécessitent toujours un support mécanique, ce qui réduit leurs applications et limite obligatoirement leur longueur.

Enfin, le coût de ces rubans est extrêmement élevé, en raison de leur fabrication compliquée.

Il a également déjà été proposé (demande de brevet EP-A-0 035 816) d'utiliser une règle flexible comprenant un ruban métallique dans lequel sont inclus des petits aimants. L'utilisation d'un ruban métallique assure une bonne stabilité dimmensionnelle, mais la présence des aimants dans le ruban fait que la règle est le siège d'une attraction magnétique, ce qui limite les applications de ce dispositif aux machines à bois.

Par ailleurs, l'inclusion des aimants réduit la flexibilité du ruban, notamment lorsque ce dernier doit être enroulé ou passer sur des poulies et subir des tensions importantes. Dans de telles conditions d'utilisation, le maintien des aimants dans un ruban ayant une épaisseur comprise entre 0,1 et 0,25 mm ne paraît pas réaliste.

Le document US-A-4 316 081 propose un mètre numérique à affichage avec une règle de mesure flexible constituée par une alternance de billes magnétiques et non magnétiques enfilées sur un fil, cette règle étant complètement enrobée de résine.

Le document DE-A-3 318 765 concerne un procédé de fabrication d'une règle capacitive à partir d'une bande conductrice comportant des encoches unilatérales et des éléments conducteurs discrets disposés dans ces encoches, avec un support isolant, une bande de renforcement et éventuellement une couche de protection des éléments électriques.

Enfin, il existe une dernière catégorie de dispositifs de mesure de déplacement et de position comprenant une règle générant des lignes de champ magnétique utilisables comme repères détectables, par le passage d'un courant électrique dans un conducteur réalisé en circuit imprimé sur un support rigide. Cette solution coûteuse n'est pas satisfaisante pour les grandes machines car de telles règles sont limitées en longueur. De plus, ces dispositifs qui assurent des précisions qui sont inutiles pour de nombreuses applications nécessitent un interface électronique complexe et coûteux.

La présente invention a pour objet un dispositif de mesure de déplacement et de position destiné au positionnement automatique de machines de grande longueur telles que machines de transfert et de manutention, robots de portage, vérins pneumatiques à bande, scies de coupe à longueur de matériaux industriels, systèmes de magasinage automatique, dispositif qui soit de structure simple, d'un coût réduit, d'un fonctionnement fiable et puisse travailler dans les conditions sévères (poussières, copeaux, vapeur, pluie, huile, eau) susceptibles d'être rencontrées dans de telles applications industrielles. L'invention a également pour objet un dispositif de mesure de déplacement et de position dont la règle flexible puisse subir des tensions importantes et puisse sans difficulté être enroulée ou passer sur des poulies. De plus, l'invention a pour objet un dispositif de mesure de déplacement et de position qui, malgré sa structure simple, procure une précision de mesure élevée.

Tel que revendiqué, le dispositif de mesure de déplacement et de position de deux objets mobiles en translation l'un par rapport à l'autre comprend une règle graduée reliée à l'un des objets et constituée par un ruban métallique flexible pouvant être enroulé ou passer sous tension sur des poulies et muni entre ses deux bords longitudinaux, en tant que graduation, d'au moins une rangée longitudinale d'ajours équidistants. Le dispositif comprend également un détecteur relié à l'autre objet et explorant la graduation de la règle lors du déplacement des deux objets l'un par rapport à l'autre, détecteur dont le fonctionnement est basé sur les caractéristiques de perméabilité magnétique ou de conduction électrique du métal du ruban. Selon l'invention, le ruban métallique constituant la règle est revêtu, à l'endroit de la rangée d'ajours, sur chacune de ses deux faces, d'un ruban en un matériau amagnétique ou isolant, recouvrant les ajours en les obturant, tout en laissant le ruban métallique nu, c'est-à-dire non revêtu, sur ses deux bords longitudinaux, en vue du guidage du ruban métallique à l'endroit de ses bords longitudinaux par des glissières du détecteur.

De préférence, le ruban métallique (4) est en acier inoxydable.

Les ajours du ruban constituant la règle étant obturés, cette dernière qui ne comporte pas de moyens générateurs de champ magnétique, lesquels se trouvent sur le détecteur, est parfaitement lisse en surface et n'accroche ou n'attire pas les corps étrangers. L'exploration magnétique de cette règle, qui n'est en aucune manière perturbée par le matériau a magnétique utilisé pour combler les ajours, rend le dispositif également insensible à l'eau, à l'huile, etc.

Le détecteur du dispositif conforme à l'invention comprend de préférence un aimant permanent et un élément détecteur (générateur de Hall, magnétorésistance) détectant les variations d'intensité du champ magnétique de l'aimant sous l'effet du mouvement relatif règle/détecteur.

Il est possible dans le cadre de l'invention, de disposer l'aimant permanent sur une face de la règle et l'élément détecteur sur l'autre face de la règle, auquel cas chaque intervalle entre les ajours de la règle fait office de masque empêchant le champ magnétique de l'aimant d'atteindre l'élément détecteur lorsqu'il se trouve entre les deux. Cependant, suivant un mode de réalisation préféré de l'invention, l'aimant permanent et l'élément détecteur sont disposés sur la même face de la règle, l'élément détecteur étant disposé entre l'aimant permanent et la règle, auquel cas les intervalles entre les ajours font office de concentrateur du champ magnétique de l'aimant.

En vue de l'obtention de signaux de sortie sinusoïdaux du détecteur, il est avantageux de donner aux ajours de la règle une forme rectangulaire perpendiculaire à la longueur de cette dernière, et d'utiliser un élément détecteur circulaire présentant une diamètre sensiblement égal à la largeur des ajours.

En se référant aux dessins schématiques annexés, on va décrire ci-après plus en détail plusieurs modes de réalisation illustratifs et non limitatifs d'un dispositif de mesure conforme à l'invention; sur les dessins :
la figure 1 est une vue d'ensemble en perspective d'un dispositif de mesure de déplacement et de position conforme à l'invention;
la figure 2 représente une vue en plan de principe de la règle du dispositif conforme à l'invention;
les figures 3, 4 et 6 sont des coupes longitudinales de règles qui n'entrent pas dans le cadre de l'invention telle que revendiquée;
la figure 5 est une coupe longitudinale de la règle du dispositif conforme à l'invention;
la figure 7 montre la disposition de l'aimant permanent et de l'élément détecteur par rapport à la règle;
les figures 8a, 8b, 8c et 8d représentent les positions successives d'un ajour de la règle par rapport au détecteur;
la figure 9 représente la forme du signal de sortie du détecteur;
les figures 10 et 11 représentent les moyens de guidage de la règle sur le détecteur.

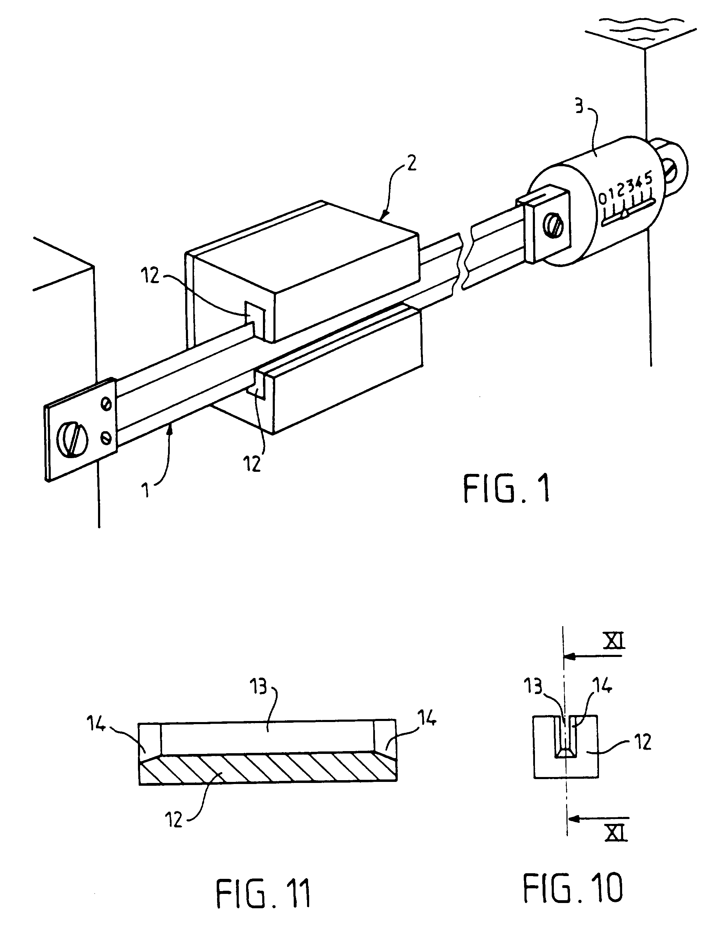

Tel qu'illustré par la figure 1, un dispositif de mesure de déplacement et de position conforme à l'invention comprend une règle graduée 1 et un détecteur 2 explorant la graduation de la règle 1. La règle 1 est montée sous tension entre deux parties fixes, un dispositif de réglage de tension 3 étant prévu entre une extrémité de la règle 1 et l'une desdites deux parties. Le détecteur 2 est fixé de son côté à un élément non représenté mobile en translation parallèlement à la règle 1.

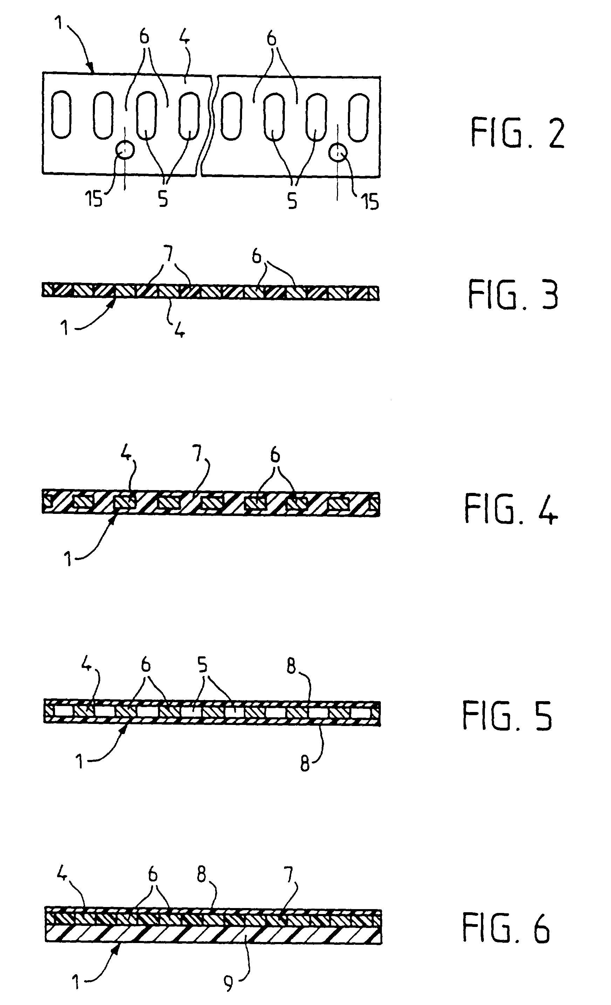

Tel que cela apparaît sur la figure 2, la règle 1 est constituée par un ruban métallique 4 muni d'une rangée longitudinale d'ajours 5 identiques séparés par des intervalles 6 identiques. Les ajours 5 sont réalisés sous la forme de trous oblongs dont les grands côtés sont parallèles et perpendiculaires à la direction longitudinale du ruban 4. Dans l'exemple illustré, les ajours 5 présentent la forme d'un rectangle dont les deux petits côtés sont incurvés en demi-cercle.

Une règle graduée telle que décrite jusqu'à présent est connue en soi par la demande de brevet WO 89/02570.

Suivant l'invention, le ruban 4 formant la règle 1 est constitué par un métal présentant de bonnes propriétés mécaniques (résistance à la traction, flexibilité), une bonne stabilité dimensionnelle sous l'effet des variations de température, une bonne résistance aux atmosphères dans lesquelles doit travailler le dispositif (humidité, eau, vapeurs agressives), une perméabilité magnétique élevée et une faible rémanence magnétique.

De plus, suivant l'invention, les ajours 5 du ruban 4 constituant la règle 1 sont obturés à l'aide d'un matériau amagnétique.

Selon la figure 3, les ajours sont obturés par le fait qu'ils sont remplis sur toute leur profondeur par une matière amagnétique 7.

Selon la figure 4, le ruban 4 formant la règle 1 est enrobé d'une matière amagnétique 7 à l'endroit de la rangée d'ajours 5, ces derniers étant simultanément remplis.

Selon la figure 5, le ruban 4 est revêtu sur chacune de ces deux faces, au moins dans la zone des ajours 5, par un ruban 8 de matériau amagnétique, les deux rubans 8 obturant les ajours 5 sans que ces derniers ne soient remplis.

Selon la figure 6, les ajours 5 du ruban 4 formant la règle 1 sont remplis à l'aide d'un matériau de remplissage amagnétique 7, le ruban 4 est fixé par l'une de ces faces sur un support 9 rigide et est revêtu sur son autre face, au moins dans la zone des ajours, par un ruban 8 de matériau amagnétique.

Le fait que, suivant l'invention, les ajours 5 du ruban 4 formant la règle 1 soient obturés procure à la règle 1, malgré la présence des ajours 5, une surface parfaitement lisse, sans altérer aucunement les caractériques magnétiques que la règle 1 possède du fait de la présence des ajours 5 (alternance de zones de perméabilité magnétique faible correspondant aux ajours et de zones à perméabilité magnétique élevée correspondant aux intervalles entre les ajours). Ainsi, la règle 1 peut être utilisée même en présence de copeaux, de poussières et de corps étrangers analogues sans que ces derniers ne se fixent à la règle et ne soient entraînés par cette dernière dans le détecteur.

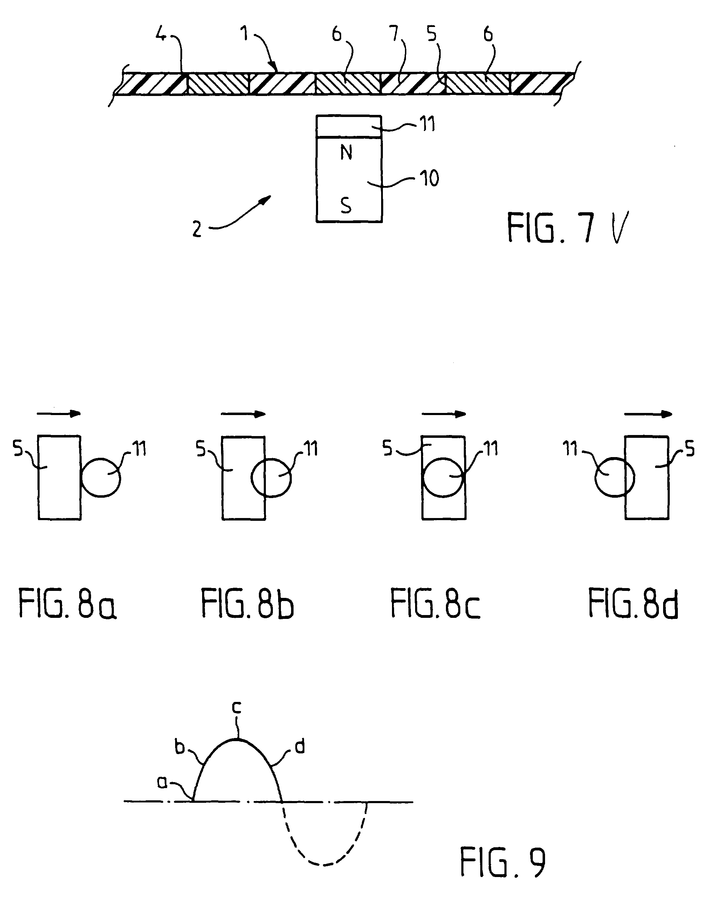

Selon la figure 7, le détecteur 2 coopérant avec la règle 1 comprend à la fois un moyen générateur de champ magnétique constitué par un aimant permanent 10 et un élément détecteur de champ magnétique 11 constitué par exemple par un générateur de Hall ou par une magnétorésistance, l'élément détecteur 11 étant disposé entre l'aimant permanent 10 et la règle 1.

Tel que cela apparaît sur les figures 7 et 8a à 8d, l'élément détecteur magnétique 11 est un élément circulaire ayant un diamètre sensiblement égal à la largeur des ajours 5 oblongs, représentés ici comme étant des ajours rectangulaires. Cela permet d'obtenir, comme le montre la figure 9, un signal de sortie de détecteur de forme essentiellement sinusoïdale au passage des ajours 5 et des intervalles 6 entre les ajours 5 devant le détecteur 11. L'alternance positive indiquée en trait plein est produite par un premier détecteur, l'alternance négative indiquée en tirets par un second détecteur décalé de façon connue en soi de 180° par rapport au premier détecteur.

Selon les figures 1, 10 et 11, le détecteur 2 comporte, pour son guidage par rapport à la règle 1, deux glissières 12 qui, lorsque la règle 1 est nue, c'est-à-dire n'est pas enrobée ou revêtue de matériau amagnétique sur ses deux bords, peuvent être en céramique, par exemple en alumine. Il ressort des figures 10 et 11 que les fentes de guidage 13 des glissières 12 sont chanfreinées en 14 sur les trois côtés aux deux extrémités longitudinales des fentes 13.

Les matériaux magnétiques susceptibles d'être utilisés pour constituer le ruban de la règle peuvent être avantageusement choisis parmi les aciers inoxydables magnétiques. Il peut s'agir d'aciers austénitiques qui deviennent martensitiques par déformation à froid, par exemple type Z 12-CN 17-07 (AFNOR) ou AISI 301, d'aciers austénitiques à durcissement structural qui deviennent martensitiques par précipitation, par exemple type Z 6-CN8 17-4 ou ARMCO 17/4 PH, ou type Z 6-CN8 17-7 ou ARMCO 17/7 PH, ou encore d'aciers martensitiques alliés ou chrome type Z 30/C13 et leur famille.

Les matériaux amagnétiques susceptibles d'être utilisés, dans le cadre de l'invention, pour obturer les ajours 5 du ruban 4 formant la règle 1, doivent être choisis de manière à ne pas altérer la flexibilité de la règle. Des matériaux tels que des élastomères ou des résines de silicone conviennent parfaitement.

Dans le cadre de l'invention, les ajours 5 et les intervalles 6 entre les ajours 5 peuvent être avantageusement choisis de manière à constituer, dans le sens longitudinal de la règle, lorsque la règle n'est pas sous tension, une graduation dont le pas est très légèrement inférieure au pas que la règle doit présenter en fonctionnement. La règle est alors montée sous une tension telle que grâce à son allongement, sa graduation présente le pas requis.

Dans le mode de réalisation de la figure 1, l'aimant permanent générateur du champ de détection et l'élément détectant les variations de ce champ sont disposés du même côté de la règle (voir figure 7), ce qui non seulement simplifie la structure et réduit la taille du détecteur et simplifie le blindage magnétique de ce dernier, mais permet en plus de nettoyer de façon simple et sans démontage le détecteur, par exemple par soufflage à l'aide d'air comprimé, comme cela est désirable pour les applications industrielles.

Une application particulièrement intéressante du détecteur conforme à l'invention réside dans l'incorporation de ce dernier à un vérin pneumatique à bande de type connu en soi utilisé en particulier pour des mouvements de translation de grande'amplitude. Dans ce cas, la règle 1 peut être montée directement à la place de la bande dont sont munis de tels vérins. En effet, grâce à ses surfaces lisses, la règle 1, tout en permettant une parfaite mesure de position, est complètement inoffensive pour les joints d'étanchéité dont de tels vérins sont munis à l'endroit de la sortie de la bande du corps du vérin.

Il va de soi que le mode de réalisation décrit et illustré n'a été donné qu'à titre d'exemple non limitatif et que de nombreuses modifications et variantes sont possibles dans le cadre de l'invention.

Ainsi, la forme des ajours 5 du ruban 4 constituant la règle 1 peut être différente de celles représentées, à condition que les ajours 5 présentent une plus grande dimension dans le sens transversal de la règle que dans le sens longitudinal et que leurs bords perpendiculaires à la longueur de la règle soient rectilignes et parallèles.

Le dispositif conforme à l'invention peut fonctionner avec contact entre la règle et le détecteur, comme représenté sur la figure 1, ou également sans contact, auquel cas des glissières telles que les glissières 12 suivant les figures 1, 10 et 11 sont superflues.

Il y a lieu de noter également que selon la figure 2, le ruban 4 comporte, outre la rangée d'ajours 5, une rangée additionnelle d'ajours 15 qui sont plus espacés que les ajours 5 et servent, en combinaison avec un détecteur additionnel, de façon connue en soi au recalage. Bien entendu, ces ajours 15 sont également obturés de la manière décrite pour les ajours 5.

Enfin, la détection magnétique décrite comme utilisant un aimant permanent et un élément détecteur de champ magnétique, le ruban étant réalisé en un métal à perméabilité magnétique élevée et à faible rémanence magnétique, peut être remplacée dans le cadre de l'invention par une détection magnétique (inductive) basée sur les pertes par courants de Foucault dans le ruban, le détecteur comprenant alors un inducteur recevant un signal à haute fréquence qui induit des courants de Foucault dans le ruban métallique à l'endroit des intervalles entre les ajours. Dans ce cas, la détection est basée sur les caractéristiques de conduction électrique du métal du ruban et l'obturation des ajours s'effectue à l'aide d'un matériau isolant.

## Revendications

1. Dispositif de mesure de déplacement et de position de deux objets mobiles en translation l'un par rapport à l'autre, comprenant une règle graduée (1) reliée à l'un des objets et constituée par un ruban métallique (4) flexible pouvant être enroulé ou passer sous tension sur des poulies et muni entre ses deux bords longitudinaux, en tant que graduation, d'au moins une rangée longitudinale d'ajours équidistants (5), et un détecteur (2) relié à l'autre objet et explorant la graduation de la règle lors du déplacement des deux objets l'un par rapport à l'autre, détecteur dont le fonctionnement est basé sur les caractéristiques de perméabilité magnétique ou de conduction électrique du métal du ruban, caractérisé par le fait que le ruban métallique (4) constituant la règle est revêtu, à l'endroit de la rangée d'ajours (5), sur chacune de ses deux faces, d'un ruban (8) en un matériau amagnétique ou isolant, recouvrant les ajours (5) en les obturant, tout en laissant le ruban métallique (4) nu, c'est-à-dire non revêtu, sur ses deux bords longitudinaux, en vue du guidage du ruban métallique à l'endroit de ses bords longitudinaux par des glissières (12) du détecteur (2).

2. Dispositif selon la revendication 1, caractérisé par le fait que le ruban métallique (4) est en acier inoxydable.

## Claims

1. Device for measuring the movement and position of two objects capable of translational motion relative to each other, comprising a graduated rule (1) connected to one of the objects and consisting of a flexible metal band (4) adapted to be coiled or guided under tension on pulleys and provided between its two longitudinal edges, as graduation, with at least one row of equidistant longitudinally spaced openings (5), and a detector (2) connected to the other object and scanning the graduation of the rule when the two objects more relative to each other, with the operation of the detector being based on the magnetic permeability or the electric conduction characteristics of the metal of the band, characterized in that the metal band (4) forming the rule is coated in the area of the row of openings (5) on each of the two sides thereof with a band (8) of nonmagnetic or isolating material covering the openings (5) by blocking them off while leaving the metal band (4) blank, i.e., uncoated, on its two longitudinal edges for the guiding of the metal band at its longitudinal edges by sliding rails (12) of the detector (2).

2. Device according to claim 1, characterized in that the metal band (4)consists of stainless steel.

## Patentansprüche

1. Vorrichtung zum Messen der Verlagerung und der Position von zwei in bezug aufeinander translatorisch beweglichen Gegenständen, mit einem an einem der Gegenstände angeschlossenen Maßstab (1) aus einem flexiblen, metallischen Band (4), das aufgewickelt oder unter Zugspannung um Rollen geführt werden kann, und zwischen seinen zwei Längsrändern, als Meßteilung, mit mindestens einer Längsreihe von gleichbeabstandeten Durchbrüchen (5) versehen ist, und einem an dem anderen Gegenstand angeschlossenen Fühler (2) zum Abtasten der Meßteilung des Maßstabes während der Verlagerung der beiden Gegenstände in bezug aufeinander, wobei die Wirkungsweise des Abtastens auf der Eigenschaft der magetischen Permeabilität oder der elektrischen Leitfähigkeit des Metalls des Bandes beruht, dadurch gekennzeichnet, daß das den Maßstab bildende metallische Band (4) in dem Bereich der Reihe von Durchbrüchen (5), auf seinen beiden Seiten, mit einem Band (8) aus unmagnetischen oder isolierenden Material beschichtet ist, das die Durchbrüche (5) abdeckt und somit verschließt, und dabei das metallische Band (4) an seinen beiden Längsrändern blank, d. h. unbeschichtet läßt, für die Führung des metallischen Bandes an seinen Längsrändern durch Gleitschienen (12) des Fühlers (2).

2. Vorrichtung nach Anspruch 1, dadurch gekennzeichnet, daß das metallische Band (4) aus rostfreiem Stahl besteht.
